# EUROPEAN PATENT SPECIFICATION

(11) **EP 0 664 192 B1**
(45) Date of publication and mention of the grant of the patent: **18.02.1998**
(21) Application number: 95300337.3
(22) Date of filing: 19.01.1995
(51) Int. Cl.: B29B 7/60

(54) **Process for continuously mixing two or more materials with non-pulsating mixing and filling storage containers**
Verfahren zum kontinuierlichem Mischen von zwei oder mehreren Materialien in nicht pulsierendem Mischen und Füllen von Speicherbehälter
Procédé pour mélanger en continu deux ou plusieurs matériaux de manière non pulsatoire et remplissage de récipients de stockage

(30) Priority: 21.01.1994 US 184157; 21.01.1994 US 184370
(43) Date of publication of application: 26.07.1995
(73) Proprietor: DOW CORNING CORPORATION, Midland Michigan 48686-0994 (US); Sealex Incorporated, Harbor Springs, Michigan (US)
(72) Inventor: Hagen, Peter Robert, Harbor Springs, Michigan (US)
(74) Representative: Kyle, Diana

(56) References cited:
- EP-A- 0 141 930
- EP-A- 0 230 312
- EP-A- 0 245 790
- DE-A- 3 504 107

## Description

This invention relates to a process for continuously mixing two or more pumpable materials and filling storage containers.

It is necessary to make small modifications to generic types of consumer and industrial elastomeric products to maximize their utility for specific applications or to customize them for individual preferences. This can be accomplished for many products by altering their formulation ratios, adding new ingredients or removing ingredients. While capability to flexibly provide families of products is desirable, it can add equipment and operating costs which are not easily passed on to the customer.

Many elastomeric compositions are produced in capital intensive processes, employing sophisticated mixing devices which provide high shear for dispersion of reinforcing and extending fillers into polymeric liquids. These devices are not easily cleaned or changed over from product to product. Large amounts of waste and considerable downtimes are the result. Some types of product variations needed are addition of pigments, polymers, adhesion promoters, fungicides, rheology controllers, plasticizers, crosslinkers, cure catalysts, cure inhibitors or other additives used in the art of elastomers, which includes sealants, rubber and other elastomer compounds. It is preferred to manufacture this range of products with processes outside of those which use sophisticated high shear devices.

An object of this invention is to provide the capability to produce and package many elastomeric products with minimal waste, minimal energy and cost while delivering them continuously, homogeneously and without pulsations.

This invention relates to two processes according to the features of independent claims 1 and 2. As a result of the processes, the mixed product exude is continuously passed from the exit end of the dynamic mixer through a multi-way valve attached to the exit end of the dynamic mixer and filled into storage containers.

Further embodiments of the invention are defined in the dependent claims.

**Figure 1** is a partial cross section of two connected disconnectable mixing units and an end disconnectable mixing unit of a dynamic mixer.

**Figure 2** is an end view of a bulkhead assembly.

**Figure 3** is an exploded cross section of the bulkhead assembly of **Figure 2** at B-B'.

**Figure 4** is a cross section at A-A' of a disconnectable mixing unit showing the flywheel configuration.

**Figure 5** is a schematic of the process showing how the equipment and the process function to provide a non-pulsating product exude.

**Figure 6** is a schematic of the filling process illustrating a three-way butterfly valve in a partial cross section.

### List of Reference Numbers and Description

- **2**: - disconnectable mixing unit
- **4**: - end disconnectable mixing unit
- **5**: - connection flange
- **6**: - casing
- **7**: - chamber wall
- **8**: - chamber
- **10**: - flywheel
- **12**: - spindle
- **13**: - male threaded spindle fastener
- **14**: - female threaded spindle fastener
- **15**: - bulkhead assembly
- **16**: - spindle bushing
- **18**: - inlet port
- **20**: - post
- **21**: - folding recess
- **22**: - washer
- **23**: - bulkhead
- **24**: - bulkhead perforation
- **25**: - direction of material flow
- **26**: - rotational direction of spindle
- **27**: - spindle driver
- **28**: - feed line
- **29**: - material exit end
- **30**: - first material supplier
- **31**: - second material supplier
- **32**: - first pump means
- **33**: - second pump means
- **34**: - feed line from first material supplier
- **35**: - feed line from second material supplier
- **36**: - first pulsate eliminator
- **37**: - second pulsate eliminator
- **38**: - first feed line into dynamic mixer
- **39**: - second feed line into dynamic mixer
- **40**: - dynamic mixer
- **41**: - driving means for dynamic mixer
- **42**: - drive spindle
- **43**: - first additive material supplier
- **44**: - second additive material supplier
- **45**: - third pump means
- **46**: - fourth pump means
- **47**: - feed line from first additive material supplier
- **48**: - feed line from second additive material supplier
- **49**: - third pulsate eliminator
- **50**: - fourth pulsate eliminator
- **51**: - third feed line into dynamic mixer
- **52**: - fourth feed line into dynamic mixer
- **53**: - first input port
- **54**: - second input port
- **55**: - third input port
- **56**: - fourth input port
- **57**: - input end of dynamic mixer
- **58**: - exit end of dynamic mixer
- **59**: - product delivery port
- **60**: - exude
- **61**: - butterfly valve first position
- **62**: - butterfly valve second position
- **63**: - sealant cartridge partially filled with exude
- **64**: - direction exude is moving
- **65**: - sealant cartridge waiting to be filled with exude
- **66**: - means for fastening three-way valve to dynamic mixer

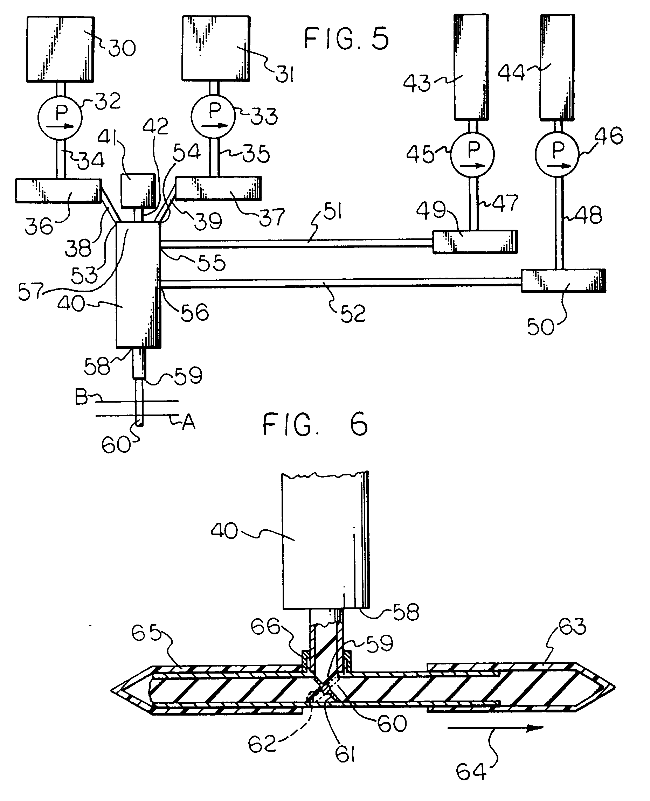

The process of this invention is shown by the schematic drawing of **Figure 5** which illustrates the equipment and the process functions to provide a non-pulsating product exude. The general process involves the mixing of at least two pumpable feed materials which may be of similar viscosities or may be of different viscosities. One situation may involve highly viscous pumpable materials, such as a paste type material, a polymer-filler mixture or what is sometimes referred to as a base material. In another situation, at least one highly viscous pumpable feed material and at least one low viscosity pumpable feed material, for example as one thinks of water as a low viscosity material, are mixed. The process of this invention is not intended to be limited to the above situations, but variations in pumpable materials from the highly viscous material to very low viscosity materials can be included. This process is required to continuously mix these materials, which may have nearly the same viscosities or which may have widely differing viscosities, they also need to be mixed to homogeneity throughout the mixing operation given the same feed materials. This means that neither the high viscosity material nor the low viscosity material can be allowed to vary in their feed ratio if an exude **60** is expected to be the same at the beginning of the process, during the process and at the end of the process. If the feed ratio were to vary from time A to time B, as illustrated in **Figure 5**, the resulting product would not be homogeneous and constant throughout the process operation. In other words, if the feed ratio varies because of pulsations in any feed, the resulting product will also exhibit variation. Although a cut of an exude at time A, may be homogeneous throughout the sample taken, it is highly unlikely that a cut of an exude at time B will have the same composition as the cut at time A if pulsations occur. For some mixing operations, variations cannot be tolerated. Therefore, the process of this invention eliminates at least two kinds of variations which may take place during an attempt to mix pumpable feed materials. One is the pulsating caused by the use of a means to force the material from the material supplier into the mixer. The other is the feed rate of each feed over a period of time.

The present process provides a means to independently balance the pressures and the volumes of pumpable feed materials entering the dynamic mixer. The pressure or force to push the material into the dynamic mixer will vary depending upon the viscosity of the pumpable feed material, the construction of the feed lines and their geometries, the pumps used and the pulsate eliminators used. The ability to regulate the pressure and the volume of each feed independently permits the delivery of the correct amounts and volumes of each feed material into the dynamic mixer at a constant rate and therefore at a constant volume ratio. This should also be a constant weight ratio because the density of a specific feed should not change during a continuous operation.

A preferred application of our process is shown by the schematic drawing of **Figure 5** which illustrates the equipment and the process functions to provide a non-pulsating product exude. This preferred process involves the mixing of at least two pumpable materials of different viscosities where one is of high viscosity, such as a paste and another is of low viscosity, such as one with a viscosity like water. This process not only is required to continuously mix these materials of widely differing viscosities, but they need to be mixed to homogeneity throughout the mixing operation given the same feed materials. This means that neither the high viscosity material nor the low viscosity material can be allowed to vary in feed ratio. It is particularly difficult to continuously mix a viscous material with a low viscosity material because the pressure used to transport the highly viscous material to the dynamic mixer is greater than the pressure to move a low viscosity fluid material to the dynamic mixer. In such a case, the viscous material may cause a blocking effect upon the low viscosity material and may force the low viscosity fluid back toward its material supplier unless there is a balance of pressures. If the feed ratio were to vary from time A to time B, the resulting product would not be homogeneous and constant throughout the process operation. In other words, if the feed ratio varies because of pulsations in any feed, the resulting product will also exhibit variation. Therefore, our process overcomes both the pulsations normally observed when mixing two or more pumpable materials and eliminates feed volume variations which are more prone to occur when at least two of the feeds having different viscosities are attempted to be input into the dynamic mixer. To operate at a continuous mode, the ratio of the feeds must remain constant so that the resulting product will have the same concentration for each feed regardless of the length of time after start-up a sample is taken at the dynamic mixer exit end **58.** To maintain a constant feed ratio, the pressures between the feeds are balanced. For example, the pressure of each feed at input ports **54**, **55**, **56** and **57** needs to be at least as great as the pressure in the dynamic mixer **40** of the mixing material in the mixer as a feed enters the mixer. The pressure balance is provided by regulating the pulsate eliminators which are illustrated in the drawing as **36**, **37**, **49** and **50**.

Material suppliers **30** and **31** represent a device or container which provides a source of a specific material to be mixed in this process. The number of material suppliers can vary from two to as many as is practical. A material supplier may be a storage container such as a tank, a drum, a bottle and the like or it may be a continuous mixing device which is used to make a pumpable material, for example, a continuous screw mixer. A material supplier may be used for high viscosity materials, such as paste-like compositions, such as polymer and filler dispersions which are made in a separate operation, usually using high shear devices. The high shear devices used for such operations may be a batch mixer such as a dough mixer or a continuous screw mixer. To move high viscosity material from the material supplier to the dynamic mixer, a force is required, such as a pump **32** or **33**. Pumps for moving highly viscous materials are known, such as a surface plate pump used for pumping materials from drums or pails. The supply of feed coming from a material supplier may be a high viscosity pumpable material, such as a paste-like sealant base. Such pumpable materials require a force to move them to a pulsate eliminator, as illustrated by **36** or **37**, to the dynamic mixer **40**. At least some of the force required is provided by a pump, such as **32** or **33** and some may be provided by a continuous mixer, like the screw mixer used to make mixtures of polymer and filler (which is sometimes referred to as a base, i.e., a sealant base).

However, pumps can provide the force necessary to push a feed **34** or **35** into the dynamic mixer **40** but they would do it with a pulsating action which translates to variation in the output product (the exude) and as such, the exude would not be homogeneous and constant over the process operation. To overcome this pulsating action, a pulsate eliminator **36** or **37** is required. These pulsate eliminators are those devices which remove the pulsations which are caused by the pumps. Devices which can be used are gear pumps or displacement pumps designed for metering. Different types of gear pumps are needed depending upon the viscosity of the pumpable material. For example, a high viscosity pumpable material needs a close tolerance gear pump while a low viscosity pumpable material needs a gear pump designed for low viscosity materials, such as may be used for pumpable additive feeds where the pulsate eliminators are illustrated by **49** and **50**. Another type of pulsate eliminator is a displacement pump, sometimes known as a syringe pump. The preferred use of the displacement pumps is to have at least two pumps in arrangement such that one syringe pump is dispensing pumpable material through a feed line such as **38**, **39**, **51** or **52**, into the dynamic mixer while another syringe pump is being filled from a pump such as **32**, **33**, **45** or **46**. The syringe pumps are synchronized such that pumpable material is being fed into the feed lines at a constant pressure without interruptions from change over from one syringe pump to another. In synchronizing the syringe pumps, the change over is timed such that the syringe cavity being filled has completed its filling operation before the syringe pump dispensing pumpable material into a feed line is completely spent of material. The syringe pumps are known displacement pumps which are constructed with a material cavity, a plunger which is used to apply force to push material from the material cavity, an inlet port and an outlet port. These pulsate eliminators remove flow variations caused by a pump forcing the feed from a material supplier through the pulsate eliminator into the dynamic mixer and provide a continuous delivery of the feed materials through a first feed-line **38** or a second feed-line **39** to the dynamic mixer **40**. The feed of high viscosity material to the dynamic mixer passes through input ports **53** and **54**. It is these feeds which need to be constant and without pulsations to obtain a homogeneous and constant exude over the time period which the continuous process is operated. The dynamic mixer is energized through a driving means **41** through a drive spindle **42**.

Additive material suppliers **43** and **44** are storage containers for low viscosity material, such as fluid additives or curing agents or they supply material directly from a continuous manufacturing source of the additive material. As with high viscosity materials, low viscosity materials also need assistance (a force) to move them to the dynamic mixer, such as with pumps **45** or **46** through feed lines **47** or **48**. As with high viscosity materials, these fluids would exhibit variation in the feed and therefore pulsate eliminators **49** and **50** are required to eliminate the pulsations of the feed into the dynamic mixer **51** and **52**. These pulsate eliminators can be the same type as those used for the high viscosity materials, but those which are designed for particular viscosity ranges should be used. Low viscosity material enters the dynamic mixer through input ports **55** and **56**. These feeds need to provide constant pressure and constant feed ratio without pulsation over the time period of continuous operation for any given product. The input ports **55** and **56** are shown somewhere along dynamic mixer **40**, however, the exact point of input from feed lines **51** and **52** can be anywhere from the input end of the dynamic mixer **57** to a point as near the exit end of the dynamic mixer **58** as will permit a thoroughly mixed and homogeneous exude. The feed ratio of high viscosity material entering at input ports **53** and **54** and of the low viscosity material entering at input ports **55** and **56** should be constant over the duration of the continuous operation of the mixing process for one product production. The feed ratio should not be varied if one desires to obtain the same constant product coming out product delivery port **59**.

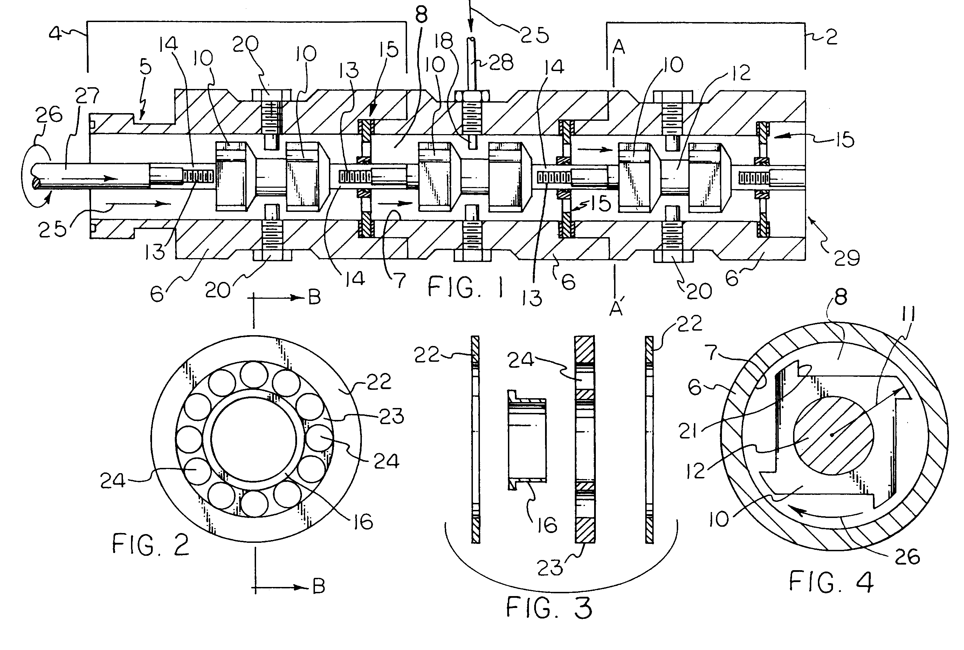

The dynamic mixer is one which operates under low pressure. The feeds and the dynamic mixer are such that the pressure at input end **57** is less than 3.5 MPa. One such in-line dynamic mixer is a particularly useful one shown in **Figures 1**, **2, 3 and 4** which has folding elements and perforated plates. The process from material supplier to delivery port has a minimal transformation of mechanical energy to heat, is easy to assemble and disassemble, easy to clean and has a minimal hold-up volume, which are important when changing feeds to make a new product.

This dynamic in-line mixer is made up of disconnectable mixing units as shown by **Figure 1**, a partial cross section of two connected disconnectable mixing units and an end disconnectable mixing unit where **2** illustrates one such unit. Each disconnectable mixing unit comprises a casing **6** containing a chamber **8** and a chamber wall **7**. The chamber is tubular in nature and its size is such that it can be connected with other disconnectable mixing units including an end disconnectable mixing unit **4** which varies from the other disconnectable mixing units in that it has a connection flange **5** for attachment to an inlet for one material to be mixed and a spindle driver **27**.

In each disconnectable mixing unit, there is a spindle **12** which can be removably connected through male threaded spindle fasteners **13** to female threaded spindle fasteners **14** of another disconnectable mixing unit. Each disconnectable mixing unit has mixing means which are flywheels **10**. There are at least two flywheels per disconnectable mixing unit. Each flywheel is spaced from the next flywheel along the spindle to provide an area in which there is at least one mounted post **20** which protrude into the chamber between the flywheels. There can be one or more such post between each pair of flywheels. The posts **20** are mounted to protrude into chamber **8** from chamber wall **7**. For example, there may be four posts spaced approximately equidistance from each other around the casing and protruding into the chamber between a pair of flywheels. It is preferred to have at least four such posts between each pair of flywheels. These posts **20** may be attached to the casing by threaded means or may be welded into place or whatever other means is suitable. Using posts which are attached by threaded means allows each post to potentially become a feed line for adding other materials. This allows flexibility by interchanging a post for a feed line with an inlet port **18** as illustrated in **Figure 1**. Each disconnectable mixing unit also contains a bulkhead assembly **15**. This bulkhead increases the mixing operation and provides a homogeneous product exiting material exit end **29** throughout the continuous operation of this in-line dynamic mixer.

The bulkhead assembly **15** is shown in more detail from the end view in **Figure 2** and from the exploded cross section in **Figure 3**. The bulkhead assembly is made up of a bulkhead **23** which contains bulkhead perforations **24**. The number and size of perforations should be sufficient to allow the material to flow at an acceptable rate without being obstructive to the flow and without causing the shear to increase to an undesirable point. The bulkhead **23** is essentially stationary and is mounted such that a spindle bushing **16** is between bulkhead **23** and spindle **12**. The spindle bushing allows the spindle to rotate while the bulkhead remains stationary. The bulkhead **23** is held in place essentially perpendicular to the spindle axis by washers **22**.

The flywheel **10** is illustrated in **Figure 4** as the cross section at A-A' of a disconnectable mixing unit in **Figure 1**. As shown, the flywheel has a folding recess **21** which can be the squared shape as shown or other shapes which can be curved instead of squared. This folding recess turns the material in a folding manner into the space between two flywheels where the post also cause a mixing action to take place. As the material flows through the chamber in direction **25**, the spindle rotates, such as shown by **26**. As the spindle rotates, the flywheels also rotate. At least one point on the flywheel at the longest radius from the spindle center, describes a rotational circumference which is in spaced relationship with the chamber wall such that the material flows through the chamber without high shear and in a continuous manner. The shape of the flywheel and the nature of the folding recess facilitates the cleaning operations of the mixer.

This in-line dynamic mixer is especially useful for mixing a viscous material entering through the end disconnectable mixer unit and a low viscosity fluid material entering through an inlet port from a feed line in one of the disconnectable mixer units. This mixer is readily varied to allow for many disconnectable mixer units such that many kinds of materials can be added along the length of this in-line dynamic mixer. This mixer can be used to pigment products, to introduce additives and to add curing agents. A feature of this mixer is that it is useful for continuous operation in the production of homogeneous product exuding from the material exit end **29**.

The exude exiting product delivery port **59** can be collected in a variety of ways. For instance, if an extrusion die is attached to the product delivery port, a continuous extruded product can be obtained. The extruded material is continuously fed into a curing environment and a constant cured product is obtained. Alternatively, a multi-way valve, for example a three-way valve as shown in **Figure 6** and depicted as a butterfly valve in two positions, a first position **61** and a second position **62**, can be attached to the product delivery port **59** by a fastening means **66**. The continuous process of mixing at least two pumpable materials is then attached to a discontinuous process, i.e., the rapid filling of exude **60** into sealant containers or cartridges. **Figure 6** shows a sealant cartridge **63** which is partially filled with exude and a sealant cartridge **65** which is waiting to be filled with exude. Butterfly valve in the first position **61** allows the exude to flow in direction **64** filling sealant cartridge **63** while at the same time permitting a sealant cartridge to be placed in the position shown by sealant cartridge **65** which is waiting to be filled with exude. When the butterfly valve is moved to the second position **62**, sealant cartridge **65** is then filled with exude. The filling of cartridges and movement of the butterfly valve to accomplish this process is synchronized so that the exude exiting product delivery port **59** is maintained at a constant and continuous rate. As the butterfly valve moves from first position **61** to second position **62**, the exude entering into sealant cartridge **63** has the flow reduced at the same rate as the flow increases into sealant cartridge **65**. This process of filling sealant cartridges as illustrated in **Figure 6** can be automated. Instead of a butterfly valve, one can use a full bore ball valve. In this process, each sealant cartridge will contain a consistent product and with the ability to fill the cartridges by an automated process the customers obtain the same product cartridge after cartridge at a reduced cost.

## Claims

1. A process comprising continuously displacing with pulsating movement created by a force means from at least two material suppliers (30,31), pumpable feed material from each material supplier through respective pulsate eliminators (36,37) into a dynamic mixer (40) having an input end (57) and an exit end (58) wherein the pressure at the input end is less than 3.5 MPa and thereby continuously combining at least two pumpable feed materials in a predetermined volume ratio to provide a thoroughly mixed product which is being continuously exuded from the exit end (58) of said dynamic mixer (40) at a constant volume flow and said product exiting the dynamic mixer (40) being of constant composition throughout the time the process is operated, given the pumpable feed materials are constant and the predetermined volume ratio of pumpable feed materials is constant.

2. A process comprising continuously displacing with pulsating movement created by a force means from at least one material supplier (30,31), a high viscosity material through a first pulsate eliminator (36,37) into a dynamic mixer (40) having an input end (57) and an exit end (58) wherein the pressure at the input end is less than 3.5 MPa and thereby continuously displacing with pulsating movement created by a force means from at least one additive material supplier (43,44), a low viscosity material through at least one further pulsate eliminator (43,44) into said dynamic mixer (40) through an input port (55,56) positioned at a point between the input end (57) and the exit end (58) thereby continuously combining the high viscosity material and the low viscosity material to provide a thoroughly mixed product which is being continuously exuded from the exit end (58) of said dynamic mixer at a constant volume flow and said product exiting the dynamic mixer (40) being of one constant composition throughout the process operation.

3. The process according to claim 1 or 2, further comprising extruding said product exiting the dynamic mixer (40) into a curing environment via an extrusion die located at the exit end (58) of the dynamic mixer (40) and curing the product.

4. The process according to claim 1 or 2, further comprising extruding said product exiting the dynamic mixer (40) via a multi-way valve (61,62).

5. The process according to claim 4 in which the multi-way valve (61,62) is a three-way valve and the storage containers are sealant cartridges (63).

6. The process according to claim 5, in which the three-way valve is a butterfly valve.

## Patentansprüche

1. Verfahren, umfassend kontinuierliches Verdrängen mit durch eine Preßvorrichtung erzeugter pulsierender Bewegung aus wenigstens zwei Materialquellen (30,31) pumpfähigen Einsatzmaterials aus jeder Materialquelle durch entsprechende Pulsationstilger (36,37) in einen dynamischen Mischer (40) mit einem Eintrittsende (57) und einem Austrittsende (58), wobei der Druck am Eintrittsende weniger als 3,5 Mpa beträgt, und dadurch kontinuierliches Zusammenführen von wenigstens zwei pumpfähigen Einsatzmaterialien in einem vorbestimmten Volumenverhältnis zur Bereitstellung eines gründlich durchmischten Erzeugnisses, das kontinuierlich aus dem Austrittsende (58) des dynamischen Mischers (40) bei konstantem Volumenstrom abgegeben wird, und wobei das den dynamischen Mischer (40) verlassende Erzeugnis eine über die gesamte Betriebszeit des Verfahrens konstante Zusammensetzung aufweist, vorausgesetzt, daß die pumpfähigen Einsatzmaterialien konstant sind und das vorbestimmte Volumenverhältnis der pumpfähigen Einsatzmaterialien konstant ist.

2. Verfahren, umfassend kontinuierliches Verdrängen mit durch eine Preßvorrichtung erzeugter pulsierender Bewegung aus wenigstens einer Materialquelle (30,31) eines hochviskosen Materials durch einen ersten Pulsationstilger (36,37) in einen dynamischen Mischer (40) mit einem Eintrittsende (57) und einem Austrittsende (58), wobei der Druck am Eintrittsende weniger als 3,5 Mpa beträgt, und dadurch kontinuierliches Verdrängen mit durch eine Preßvorrichtung erzeugter pulsierender Bewegung aus wenigstens einer Zusatzstoffquelle (43,44) eines niederviskosen Materials durch wenigstens einen weiteren Pulsationstiiger (43,44) in den dynamischen Mischer (40) durch eine Eintrittsöffnung (55,56), die an einer Stelle zwischen dem Eintrittsende (57) und dem Austrittsende (58) angeordnet ist, und dadurch kontinuierliches Zusammenführen des hochviskosen Materials und des niederviskosen Materials zur Bereitstellung eines gründlich durchmischten Erzeugnisses, das kontinuierlich aus dem Austrittsende (58) des dynamischen Mischers bei konstantem Volumenstrom abgegeben wird, und wobei das den dynamischen Mischer (40) verlassende Erzeugnis eine einzige konstante Zusammensetzung über den gesamten Verfahrensbetrieb aufweist.

3. Verfahren nach Anspruch 1 oder 2, ferner umfassend das Extrudieren des den dynamischen Mischer (40) verlassenden Erzeugnisses über eine Extrusionsdüse am Austrittsende (58) des dynamischen Mischers (40) in eine Umgebung, die das Aushärten des Erzeugnisses bewirkt, und Aushärten des Erzeugnisses.

4. Verfahren nach Anspruch 1 oder 2, ferner umfassend das Extrudieren des den dynamischen Mischer (40) über ein Mehrwegeventil (61,62) verlassenden Erzeugnisses.

5. Verfahren nach Anspruch 4, bei dem das Mehrwegeventil (61,62) ein Dreiwegeventil ist und die Aufbewahrungsbehälter Dichtungskartuschen (63) sind.

6. Verfahren nach Anspruch 5, bei dem das Dreiwegeventil eine Drosselklappe ist.

## Revendications

1. Procédé consistant à déplacer en continu, grâce à un mouvement pulsatoire provoqué par un moyen d'application de force, à partir d'au moins deux dispositifs d'alimentation en matériau (30, 31), un matériau d'alimentation pompable à partir de chaque dispositif d'alimentation en matériau, par l'intermédiaire d'amortisseurs de pulsations respectifs (36, 37) jusque dans un mélangeur dynamique (40) comportant une extrémité d'entrée (57) et une extrémité de sortie (58) dans lequel la pression au niveau de l'extrémité d'entrée est inférieure à 3,5 MPa, et à combiner de ce fait en continu au moins deux matériaux d'alimentation pompables suivant un rapport volumétrique prédéterminé afin de former un produit intimement mélangé qui sort en continu de l'extrémité de sortie (58) dudit mélangeur dynamique (40) à un débit-volume constant, ledit produit sortant du mélangeur dynamique (40) étant d'une composition constante pendant toute la durée de mise en oeuvre du procédé, étant entendu que les matériaux d'alimentation pompables sont constants et que le rapport volumétrique prédéterminé des matériaux d'alimentation pompables est constant.

2. Procédé consistant à déplacer en continu, grâce à un mouvement pulsatoire créé par un moyen d'application de force, à partir d'au moins un dispositif d'alimentation en matériau (30, 31), un matériau à viscosité élevée par l'intermédiaire d'un premier amortisseur de pulsations (36, 37) jusque dans un mélangeur dynamique (40) comportant une extrémité d'entrée (57) et une extrémité de sortie (58) dans lequel la pression au niveau de l'extrémité d'entrée est inférieure à 3,5 MPa, et à déplacer ainsi en continu, grâce à un mouvement pulsatoire créé par un moyen d'application de force, depuis au moins un dispositif d'alimentation en matériau additif (43, 44), un matériau à faible viscosité par l'intermédiaire d'au moins un amortisseur de pulsations supplémentaire (43, 44) jusque dans ledit mélangeur dynamique (40) par l'intermédiaire d'un orifice d'entrée (55, 56) positionné au niveau d'un point situé entre l'extrémité d'entrée (57) et l'extrémité de sortie (58), en combinant ainsi en continu le matériau à viscosité élevée et le matériau à faible viscosité pour former un produit intimement mélangé qui est refoulé en continu à partir de l'extrémité de sortie (58) dudit mélangeur dynamique à un débit-volume constant, ledit produit sortant du mélangeur dynamique (40) étant d'une seule composition constante pendant tout le déroulement du procédé.

3. Procédé selon la revendication 1 ou 2, comprenant en outre l'extrusion dudit produit sortant du mélangeur dynamique (40) dans un environnement de vulcanisation par l'intermédiaire d'une filière d'extrusion située à l'extrémité de sortie (58) du mélangeur dynamique (40) et la vulcanisation du produit.

4. Procédé selon la revendication 1 ou 2, comprenant en outre l'extrusion dudit produit sortant du mélangeur dynamique (40) par l'intermédiaire d'un robinet à plusieurs voies (61, 62).

5. Procédé selon la revendication 4, dans lequel le robinet à plusieurs voies (61, 62) est un robinet à trois voies et les récipients de stockage sont des cartouches de produit d'étanchéité (63).

6. Procédé selon la revendication 5, dans lequel le robinet à trois voies est un robinet à papillon.
